(19) Europäisches Patentamt
European Patent Office
Office européen des brevets

(11)  **EP 2 624 145 A1**

(12)  **EUROPEAN PATENT APPLICATION**

(43) Date of publication:
    **07.08.2013 Bulletin 2013/32**

(51) Int Cl.:
    **G06F 17/30** (2006.01)

(21) Application number: **12153223.8**

(22) Date of filing: **31.01.2012**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME** | (72) Inventor: **Hong, Dohy**<br>**91620 Nozay (FR)** |
| | (74) Representative: **Loyer & Abello**<br>**9, rue Anatole de la Forge**<br>**75017 Paris (FR)** |
| (71) Applicant: **Alcatel Lucent**<br>**75007 Paris (FR)** | |

(54)  **Computer implemented method of ranking nodes**

(57)      A Computer implemented method of ranking nodes within a collection of nodes linked by a collection of directional links,
the method comprising:
associating an accumulation score and a temporary score to each node, and iteratively performing the steps of:
selecting (15) a node,
determining a distributable part of the temporary score of the selected node,
increasing (17) the accumulation score of the selected node as a function of the distributable part,
removing (18) the distributable part from the temporary score of the selected node,
damping the distributable part as a function of a damping coefficient, and
distributing (16) the damped distributable part among the destination nodes of the links of which the node is a source node, so that the temporary score associated to each of the destination nodes is increased by a received score, wherein a sum of the received scores of the said destination nodes is equal to the damped distributable part.

FIG.2

## Description

**Field of the invention**

The invention relates to the technical field of assigning ranks to nodes in a collection of nodes connected by links, such as, for instance the field of ranking web pages of the World Wide Web or documents containing citations in a bibliographic database.

**Background**

Due to developments in computer technologies, the number of documents stored in large databases follows a significant growing trend. Therefore, it becomes more and more essential to be able to search among these databases in an efficient manner. For instance, Internet search engines are used by Internet users to search web pages among the World Wide Web. These search engines are used to display a selection of the best matching web pages corresponding to a search request of a web user. In this context, it is important to be able to structure and rank the relevancy of each webpage in order to retrieve the right information relevant to each search request.

An existing approach to solve this problem is known as PageRank. The basic idea of PageRank consists in ranking a homogeneous graph formed by pointers between web pages. The ranking is performed by iteratively taking into account the relevancy of a node which points to another node from the exploration of the graph.

A method for updating importance ranks of Internet Web pages is described in US2003/0050909. The method includes a step consisting in the update of the importance rank of web pages in the internet in real time during the visit of the web pages by a web agent. This step is repeated as many times as required. This method involves the distribution of a short history indication of a visited webpage to the web pages it leads to through its hyperlinks. The short history is also recorded in a long history indication of the visited node.

However, the complexity to compute the relevancy ranks increases quickly with the number of web pages to be ranked. Therefore, due to the large number web pages on the World Wide Web, the computation costs used to structure and rank the relevancy of even a part of the web pages may be very high.

**Summary**

In an embodiment, the invention provides a computer implemented method of ranking nodes within a collection of nodes linked by a collection of directional links, each link pointing from a source node to a destination node, the collection of nodes and the collection of links being stored in data repositories, the method comprising:

associating an accumulation score and a temporary score to each node comprised in the collection of nodes, and
iteratively performing the steps of:

selecting a node,
determining a distributable part of the temporary score of the selected node, increasing the accumulation score of the selected node as a function of the distributable part,
removing the distributable part from the temporary score of the selected node,
damping the distributable part as a function of a damping coefficient, and
distributing the damped distributable part of the temporary score of the selected node among the destination nodes of the links of which the selected node is a source node, so that the temporary score associated to each of the destination nodes is increased by a received score, wherein a sum of the received scores of the said destination nodes is equal to the damped distributable part of the temporary score of the selected node,
computing a rank for a node as a function of the temporary score and/or the accumulation score of the node.

According to embodiments, such computer implemented method can comprise one or more of the features below.

In embodiments of the computer implemented method, the method further comprises for each node:

determining a number of outgoing links $N_o$, the number of outgoing links $No$
representing the number of links of which the respective node is a source node,
determining a number of incoming links $N_i$, the number of incoming links $N_i$
representing the number of links of which the respective node is a destination node,
and the iterative steps further comprise a step of computing a link-based score $S_l$ for each node, the link-based score being computed as a function of the temporary score T of the said node, the number of outgoing links $N_o$ of the said node, and the number of incoming links $N_i$ of the said node,
and wherein the step of node selection comprises:

determining a maximum link-based score among the link-based scores of the collection of nodes and
selecting a node having a temporary score equal to the maximum link based score.

In embodiments of the computer implemented method, the link based score is computed as:

$$S_l = \frac{T}{(N_o+1)\times(N_i+1)}.$$

In embodiments of the computer implemented method, the iterative step further comprises a step of determining a temporary score threshold, the selection of the node in the node selection step being made among the nodes for which the node has a temporary score higher than the temporary score threshold.

In embodiments of the computer implemented method, the step consisting in the selection of a node comprises:

> determining a maximum temporary score among the temporary scores of the collection of nodes and the selecting of a node having a temporary score equal to the maximum temporary score.

In embodiments of the computer implemented method, the iterative steps are performed until a convergence criterion is reached and wherein the iterative steps further comprise a step of determining a sum of temporary scores of the nodes of the collection of nodes, the convergence criteria being reached when the sum of temporary scores is smaller than a sum threshold.

In embodiments of the computer implemented method, the method further comprise a step of determining a temporary score threshold, the selection of the node in the node selection step being made among the nodes for which the node has a temporary score higher than the temporary score threshold, and the iterative steps comprise a step of reducing the temporary score threshold if no node has a temporary score above the temporary score threshold.

In embodiments of the computer implemented method, the method further comprises a step of generating a precision value as a function of the sum of the temporary scores of all the nodes of the collection of nodes,
and a step of decreasing at each iteration the precision value by a value which is defined as a function of the difference between the distributable part of the temporary score of the selected node and the damped distributable part of the temporary score, the convergence criteria being reached when the precision value is smaller than a precision value threshold.

In embodiments of the computer implemented method, the iterative steps further comprise:

> determining the number of outgoing links $N_o$ of the selected node, the number of outgoing links $N_o$ representing the number of nodes (13) for which the selected node is a source node, and
> if the number of outgoing links $N_o$ is equal to zero, omitting the step of distribution

In embodiments of the computer implemented method, the distributable part of the temporary score is equal to the temporary score.

In embodiments of the computer implemented method, the step of distributing the damped distributable part further comprises a step of determining a number of outgoing links $N_o$ of the selected node, the number of outgoing links $N_o$ representing the number of links for which the selected node is a source node, wherein the temporary score of each of the destination node is increased by the received score divided by the number of outgoing links of the selected node.

In embodiments of the computer implemented method, the temporary score associated to each node, in the step of initially associating a temporary score to each node, is the same for each node of the collection of nodes.

In embodiments of the computer implemented method, the step of associating a temporary score to each node comprises the definition of the temporary score of the respective node as a function of additional information about the node.

In embodiments of the computer implemented method, the damping coefficient is smaller than 1 and is preferably equal to 0.85.

In embodiments of the computer implemented method, the nodes of the collection of nodes are web pages and the links of the collection of links are hyperlinks.

In embodiments, the invention also provides a computer program comprising computer-executable instructions that cause a computer to execute any one of the above-mentioned methods.

An idea on which the invention is based consists in evaluating a score that represents an appreciation of a node in a collection of nodes linked by a collection of links. The appreciation score is evaluated by iteratively distributing relevance. Relevance is modeled in the form of a measurable quantity. Relevance is distributed from parent nodes to child nodes, the child nodes representing the nodes pointed by the parent nodes with their links. This evaluation of the score is obtained in an efficient manner by damping the relevance distributed at each iteration so as the total quantity of relevance among the nodes iteratively tends to zero. The relevance crossing a node is recorded in order to evaluate the score of the node.

Therefore, an idea on which the invention is based is to evaluate the score of the nodes of a collection of nodes on the basis of the distribution of relevance from parent nodes to child nodes, considering a limited total quantity of relevance to be distributed.

Aspects of the invention are based on the idea of providing an efficient method of computing the score of the nodes by iteratively selecting a node and distributing its relevance to its child node. This efficient method is provided by a selection of nodes so that the distribution of relevance is made in an efficient manner. Therefore aspects on the invention are based on the idea of selecting the nodes according to the relevance they are able to distribute.

**Brief description of the drawings**

These and other aspects of the invention will be apparent from and elucidated with reference to the embodiments described hereinafter, by way of example, with reference to the drawings.

Figure 1 is a schematic representation of a computer system in which the invention may be applied
Figure 2 is a flow diagram showing an embodiment of a method according to the invention.
Figure 3 to 6 are schematic representations of scores obtained at successive iterations of the flow diagram according to figure 2 in a collection example of web pages and links.

**Detailed description of the embodiments**

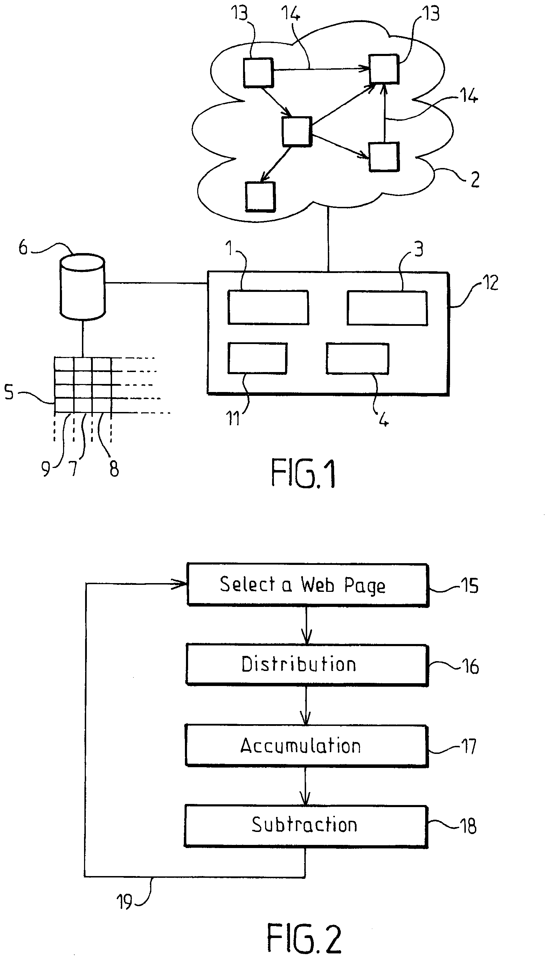

Figure 1 shows a web agent 1 visiting the World Wide Web 2. When visiting the Web 2, the web agent extracts and analyses web pages 13 from the Web 2 and provides data about the visited web pages 13 to a search engine 3. This data may be used to index, archive or perform any other process with the web pages 13.

The search engine 3 uses the data provided by the web agent 1 to reply to queries placed by web users. More precisely, when a user places a query in the search engine 3, for instance using a keyword, the search engine 3 provides a list of the web pages 13 that correspond to the query. This list of web pages 13 corresponds to the best matching web pages 13 according to the data provided by the web agent 1 and the respective relevance ranks of the web pages 13. The web pages are sorted according to their relevance rank which is calculated as a function of a temporary score and an accumulation score. In addition, the sorting of the web pages may possibly take into account additional information such as the number of occurrences of the words corresponding to the keyword in the web pages 13 and the position of these words in the webpage.

The relevance rank corresponds, for instance, to a numerical value defining the relative page relevance which is calculated and provided by the rank calculation unit 4. In order to calculate the relevance rank of the web pages 13, the calculation unit accesses a database 6 and uses an accumulation score and a temporary score associated to the web pages 13. The database 6 is connected to the rank calculation unit 4 and comprises, for each webpage of a collection of web pages, the accumulation score and the temporary score of the associated webpage 13. The temporary score and the cumulative score are represented in figure 1 as columns 7 and 8 of an array 5. A column 9 represents the webpage identifier which associates each temporary score and each cumulative score to its respective webpage 13. The webpage identifier may be for instance the web address (URL).

The database 6 comprises further data about a web page 13 such as the web pages 13 it leads to through its hyperlinks 14 or the number of pages that are leading to the respective web page 13. This data is supplied by the web agent 1 when the web agent visits a webpage 13: at each page 13 visited the data provided to the database consists in the page identifier, which is the page URL, and the page identifier of the child pages, which are the pages which are the destination of hyperlinks 14 contained in the visited webpage 13.

The temporary score and the accumulation score are calculated by a computation unit 11. In order to calculate the relevance rank of a webpage 13, the rank calculation unit may combine the temporary score and the accumulation score associated to the respective web page 13, for instance, by performing the addition of both scores.

The determination of the temporary scores and accumulation scores used by the computation unit 11 will now be described referring to figure 2 which shows a general flow diagram of the method for computing the temporary score and the accumulation score of web pages.

The determination of the temporary scores and accumulation scores of the web pages is made by the computation unit 11 on a collection of web pages listed in the array 5 of the database 6.

As a first stage, the computation unit 11 associates an initial temporary score and an initial accumulation score to each webpage of the collection of web pages.

In a first iteration the computation unit 11 selects a first web page of the collection of web pages in a step of selection 15. The computation unit 11 reads the data associated to the selected web page in the database 6 by accessing the data associated to the URL (column 9) of the selected webpage. The computation unit 11 stores the value of the temporary score of the selected web page which will be referred to as temporary score prior to distribution. As explained above, the data contains both the temporary and the accumulation scores and the child page URLs of the webpage. A child web page is the web pages pointed by the hyperlinks 14 of the selected webpage. With this data, the computation unit performs a step of distribution 16 and a step of accumulation 17.

In the step of distribution 16, the computation unit 11 calculates a damped value of the temporary score of the selected webpage. This damped value consists in a portion of 85% of the temporary score. The damped value is then shared in equal shares among the child web pages of the selected webpage. To this end, the computation unit 11 divides the value of the temporary score and adds the divided value to the temporary scores associated to the URL of the child pages of the visited web page.

In the step of accumulation 17, the computation unit 11 adds the temporary score prior to distribution to the accumulation score of the selected page.

In a step of subtraction 18, the temporary score prior to distribution of the selected page is subtracted from the temporary score of the selected web page. Thereby, if the selected webpage points to itself by a hyperlink, a divided value of its temporary score prior to distribution will be added to its temporary score in the distribution step 16. The temporary score prior to distribution is then subtracted from the temporary score of the selected webpage in the step of subtraction 18. Therefore, the divided value of the temporary score prior to distribution remains in the temporary score of the selected webpage after the step of subtraction 18.

After the step of distribution 16, the step of accumulation 17 and the step of subtraction 18, the computation unit 11 performs a new iteration 19 and therefore selects another webpage. In that process, the distribution of the temporary scores represents the distribution of the relevance of the webpage. This method is iteratively repeated until a convergence criterion is reached.

However, some visited web pages 13 may not present any hyperlinks 14 pointing to another web page 13. If the computation unit 11 selects such a webpage, the distribution step 16 is not performed. However, the value of temporary score is still added to the accumulation score of the visited webpage 13 in the step of accumulation 17, and the value of the temporary score is subtracted from the temporary score in the step of subtraction 18.

In the previous described method, the temporary score is damped by a coefficient equal to 0.85. Nevertheless, the damping coefficient may be any value lower than 1. The smaller the damping coefficient is, the smaller the influence of a specific node on the nodes connected distantly to the specific node is. Therefore, the influence area of the specific node is reduced to the closely neighboring nodes. Moreover, the smaller the damping coefficient is, the faster the convergence is.

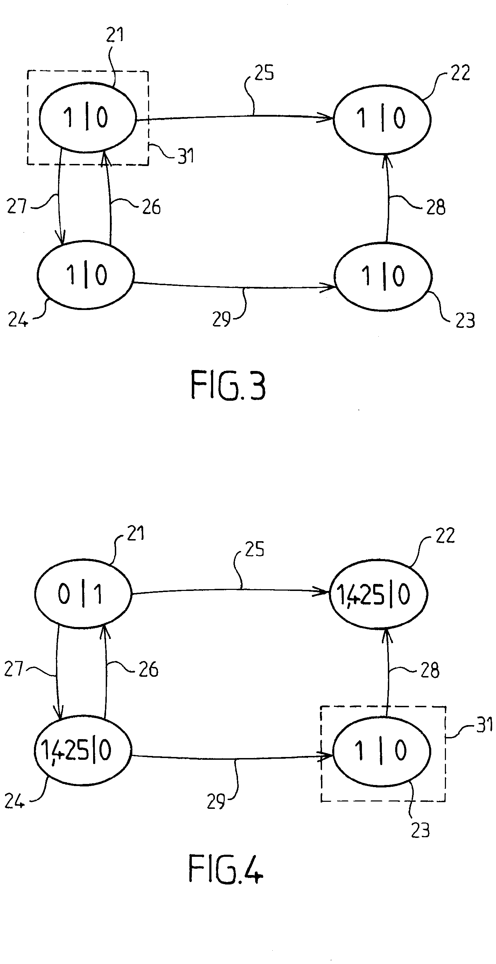

A specific example will now be described in reference to Figures 3 to 6 for a simplified collection of webpage 13 and hyperlinks 14. This specific example relates a sequence of iterations corresponding successively to new visited web pages. Figures 3 to 6 are schematic representations of the collection of web pages 13 and show four web pages 21 to 24 interconnected by a collection of links 25 to 29 representing the hyperlinks 14. The links are represented by arrows 25 to 29. For instance, two links 25 and 27 originate from the webpage 21 and respectively lead to the web pages 22 and 24. The webpage 21 is only pointed by one link 28. The webpage 22 does not contain any link pointing to another webpage.

In each webpage 21 to 24, the temporary score and the accumulation score are represented each one by a number. The numbers on the left of each webpage represent the temporary score and the numbers on the right represent the accumulation number.

In an initial phase, shown by figure 3, the temporary score of each webpage 21 to 24 is set to one and the accumulation score is set to zero.

The dotted rectangle 31 represents the webpage currently selected by the computation unit 11. Therefore figure 3 illustrates a first iteration in which the computation unit 11 is visiting the webpage 21.

According to the method explained above, the computation unit 11 recovers the data of the selected webpage 21 with its page identifier so as to recover the scores associated to the visited webpage and the scores of the web pages to which the visited page 21 points to. More specifically, the computation unit 11 is able to access the scores of web pages 21, 22 and 24.

According to the steps 16, 17 and 18 of figure 2, the computation unit 11 performs the update of the scores of these pages 21, 22 and 24. The resulting scores for the collection of web pages induced by these steps are illustrated in figure 4.

As shown in figure 4, in the accumulation step 17, the computation unit 11 increases the accumulation score of webpage 21 by 1 and sets the temporary score of the same webpage to 0.

Moreover, the computation unit 11 computes a damped value of the temporary score of webpage 21, which equals 0.85. The computation unit 11 shares then the damped value among the child nodes in equal shares. Therefore, the computation unit 11 increases the value of the temporary score of web pages 22 and 24 from 1 to 1,425.

In a second iteration, the computation unit selects the webpage 23 as it is further shown in Figure 4.

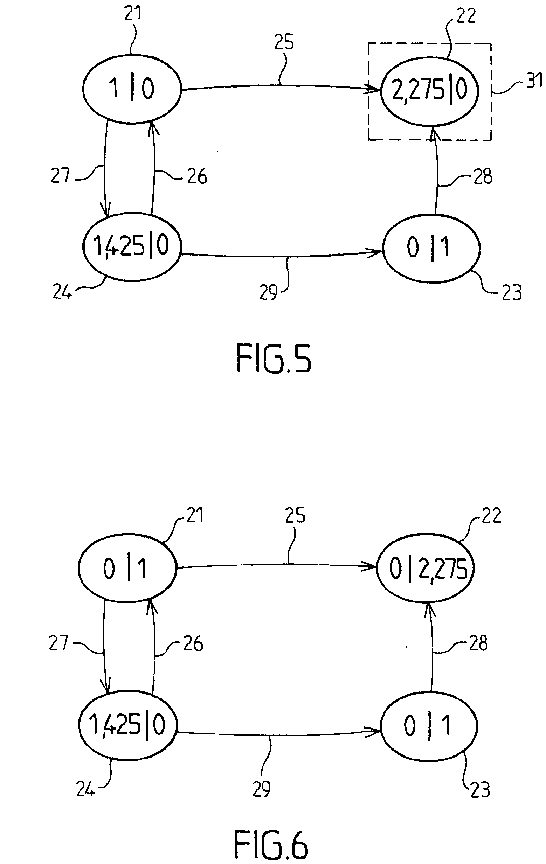

Figure 5 shows the results after update of the webpage scores according to the fact that the webpage visited in the second iteration is the webpage 23.

As the webpage 23 is only pointing to webpage 22, the whole value of the damped temporary score is distributed only to webpage 22. Therefore, the computation unit 11 increases the temporary score of webpage 22 by 0.85. Accordingly the temporary score is set to 2.275. For the same reason as in the first iteration, the temporary score of page 23 is set to 0 and the accumulation score of webpage 23 is increased by the value of temporary score of the selected node and therefore is increase by 1.

The computation unit 11 then visits page 22 in a third iteration. As page 22 does not point to any web page, the temporary score is not distributed to any page. However, the computation unit adds the temporary score to the accumulation score of page 22 and removes it from the temporary score of node 22 as it is illustrated on figure 6.

The distribution 16 of a damped temporary score value followed by the subtraction 18 of the temporary score of the selected node provides an efficient method to compute the scores of the web pages. Indeed, as a damped value of the temporary score of the visited page is distributed to the child web pages and the temporary score of the visited node is set to zero, the total sum of the temporary scores of the collection of web pages 21 to 24 decreases throughout the sequence of iterations. Therefore, after a substantial number of iterations 19, the sum of temporary score tends to zero. Moreover, the use of a damped value provides a method for calculating the score that converges in an effective and deterministic way.

The iterative selection of web pages 15 is performed until a convergence criterion is reached. For that purpose the computation unit 11 computes, at the initial step, a value identified as remaining quantity. This remaining quantity is initially calculated as the sum of the initial temporary score of the web pages 13 comprised in the collection of web pages. Each time the scores are updated after one iteration 19 of the method, the difference between the temporary score prior to distribution and the damped value of the temporary score is subtracted from the remaining quantity. Therefore, the subtracted remaining quantity defines, in the next iteration, the remaining sum of temporary scores. When the remaining quantity reaches a value below a certain threshold, the iteration loop is stopped.

Turning back to the example presented in figures 3 to 6, the remaining quantity is equal to 4 at the initial step of figure 3. At the start of the second iteration this value is at 3.85 (figure 4) and 3.7 in the third step (figure 5).

In the above example, the web pages 21 to 24 are visited iteratively on a random basis. However, the nodes may be selected as a function of their temporary score in order to provide an efficient distribution of the scores of the web pages 21 to 24.

For instance, after each iteration 19, the computing unit 11 selects the webpage with the highest temporary score.

Another method of selection may consider the number of links 14 for which the webpage is a source or a destination. For instance, after each iteration 19 a link based score $S_l$ is computed as $S_l = \frac{T}{(N_o+1) \times (N_i+1)}$ for each node. T is the temporary score of the respective node, $N_o$ the number of outgoing links and $N_i$ is the number of incoming links. Then, the computing unit selects the webpage with the highest link based score $S_l$. By this way, the web pages 13 with a significant number of outgoing links are less likely to be selected before having a higher value of temporary score T. Therefore the computation costs are reduced. Moreover, the web pages 13 with a significant number of incoming links are less likely to be selected before reaching a higher value of temporary T score which results in a decrease of the computation costs.

Another efficient method may be performed by the computing unit 11 in the selection step 15. This method consists in selecting a webpage only among the web pages having a temporary score above a threshold. When no more webpage present a temporary score above the threshold, the threshold is reduced.

For instance, in the initial stage, one may compute several thresholds after having assigned the initial temporary scores and accumulation scores in the collection of web pages. The first threshold is set to half of the maximum value of the temporary scores among the collection of web pages. A second threshold is set to the half of the first threshold.

The computing unit 11 generates a first list of all web pages above the first threshold and a list of all web pages above the second threshold.

Then, during the selection step 15, the computing unit 11 selects a webpage randomly among the web pages of the first list. After the steps of accumulation 17, distribution 16 and subtraction 18, the computation unit 11 updates the position of updated nodes in the first and second lists according to their new temporary scores and the first threshold and second threshold.

It should be noted that in the method described above the whole temporary score prior to distribution is taken into account for the step of distribution 16, the step of accumulation 17 and the step of subtraction 18. More precisely, the whole temporary score prior to distribution of each visited node is added to the accumulation score, the damped value distributed to the link is based on the whole temporary score and the whole the temporary score prior to distribution is subtracted from the temporary score at each visit.

However, in another embodiment, only a part of the temporary score prior to distribution is taken into account during these steps 16, 17 and 18. Therefore, in the distribution step 16, the damped value is calculated on the basis of a part of the temporary score of the selected node called "distributable part". For instance, if only half of the temporary score is taken into account during the steps 16 to 18 described in reference to figure 2, the computation unit 11 calculates a damped value which is equal to 0.85x0.5 and therefore the received score of web pages 22 and 24 is 0.2125. The resulting temporary score when the received value is added to the temporary score is then 1.2125. Moreover, the temporary score of the selected node is not set to zero. Only the distributable part, i.e. half of the temporary score is subtracted from the temporary score. Furthermore, the accumulation score is increased by the distributable part i.e. half of the temporary score. Therefore, the temporary score and the accumulation score are set to 0.5. The coefficient that defines the distributable part may be selected in the range ]0, 1]. In a preferred embodiment the coefficient is 1.

In the above mentioned example, the temporary scores are set to 1 on each webpage in the initial phase. Therefore, a uniform initial distribution of initial temporary scores is formed. However, a non uniform initial distribution may be applied by the computing unit, using for instance:

- a personalized initial distribution defined randomly,

- a distribution determined as a function of information contained in the web pages, or
- a distribution according to previously calculated scores.

Moreover, the accumulation value may not be equal to zero in the initial state and may be, for instance, a previously calculated accumulation score.

In the above described embodiments, the computation unit 11 distributes the damped value of temporary score in equal shares. However, in other embodiments the distribution step 16 is made using a distribution criterion. For instance, links pointing to other web pages within a same web site may be considered as contributing less than links connecting web pages of different web sites.

The methods described hereinabove are not limited to the use of search engines. More generally, the method may be adapted to any collection of nodes connected by links and defining accordingly a graph. For instance the method may be applied to a graph of documents linked by citations.

The methods described hereinabove may be executed through the use of dedicated hardware as well as hardware capable of executing software in association with appropriate software. When provided by a processor, the corresponding functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read-only memory (ROM) for storing software, random access memory (RAM), and non-volatile storage. Other hardware, conventional and/or custom, may also be included.

The invention is not limited to the described embodiments. The appended claims are to be construed as embodying all modification and alternative constructions that may be occurred to one skilled in the art, which fairly fall within the basic teaching here, set forth.

The use of the verb "to comprise" or "to include" and its conjugations does not exclude the presence of elements or steps other than those stated in a claim. Furthermore, the use of the article "a" or "an" preceding an element or step does not exclude the presence of a plurality of such elements or steps. The invention may be implemented by means of hardware as well as software. The same item of hardware may represent several "means".

In the claims, any reference signs placed between parentheses shall not be construed as limiting the scope of the claims.

**Claims**

1. A Computer implemented method of ranking nodes (13) within a collection of nodes linked by a collection of directional links (14), each link pointing from a source node to a destination node, the collection of nodes and the collection of links being stored in data repositories,
the method comprising:

   associating an accumulation score and a temporary score to each node comprised in the collection of nodes, and
   iteratively performing the steps of:

   selecting (15) a node,
   determining a distributable part of the temporary score of the selected node,
   increasing (17) the accumulation score of the selected node as a function of the distributable part,
   removing (18) the distributable part from the temporary score of the selected node,
   damping the distributable part as a function of a damping coefficient, and
   distributing (16) the damped distributable part of the temporary score of the selected node among the destination nodes of the links of which the selected node is a source node, so that the temporary score associated to each of the destination nodes is increased by a received score, wherein a sum of the received scores of the said destination nodes is equal to the damped distributable part of the temporary score of the selected node,

   computing a rank for a node as a function of the temporary score and/or the accumulation score of the node.

2. A Computer implemented method according to claim 1, wherein the method further comprises for each node (13):

   determining a number of outgoing links $N_o$, the number of outgoing links $N_o$ representing the number of links of which the respective node is a source node,
   determining a number of incoming links $N_i$, the number of incoming links $N_i$ representing the number of links of which the respective node is a destination node, and the iterative steps further comprise a step of computing a link-based score $S_l$ for each node, the link-based score being computed as a function of the temporary score T of the said node, the number of outgoing links $N_o$ of the said node, and the number of incoming links $N_i$ of the said node,
and wherein the step of node selection (15) comprises:

determining a maximum link-based score among the link-based scores of the collection of nodes and
selecting a node having a temporary score equal to the maximum link based score.

3. A computer implemented method according to claim 2, wherein the link based score is computed as:

$$S_l = \frac{T}{(N_o+1) \times (N_i+1)}$$

4. A computer implemented method according to claim 1, wherein the method further comprises a step of determining a temporary score threshold, the selection of the node in the node selection step being made among the nodes (13) for which the node has a temporary score higher than the temporary score threshold, and the iterative steps comprise a step of reducing the temporary score threshold if no node has a temporary score above the temporary score threshold.

5. A computer implemented method according to claim 1, wherein the step of selecting a node comprises:

determining a maximum temporary score among the temporary scores of the collection of nodes and selecting a node (13) having a temporary score equal to the maximum temporary score.

6. A computer implemented method according to any one of claims 1 to 5, wherein the iterative steps (15, 16, 17, 18) are performed until a convergence criteria is reached and wherein the iterative steps further comprise a step of determining a sum of temporary scores of the nodes of the collection of nodes, the convergence criteria being reached when the sum of temporary scores is smaller than a sum threshold.

7. A computer implemented method according to claim 6, wherein the method further comprises a step of generating a precision value as a function of the sum of the temporary scores of all the nodes of the collection of nodes, and a step of decreasing at each iteration the precision value by a value which is defined as a function of the difference between the distributable part of the temporary score of the selected node and the damped distributable part of the temporary score, the convergence criteria being reached when the precision value is smaller than a precision value threshold.

8. A computer implemented method according to claim 1, wherein the iterative steps further comprise:

determining the number of outgoing links $N_o$ of the selected node, the number of outgoing links $N_o$ representing the number of nodes (13) for which the selected node is a source node, and if the number of outgoing links $N_o$ is equal to zero, omitting the step of distribution

9. A computer implemented method according to any one of claims 1 to 8, wherein the .distributable part of the temporary score is equal to the temporary score.

10. A computer implemented method according to any one of claims 1 to 9, wherein the step of distributing the damped distributable part further comprises a step of determining a number of outgoing links $N_o$ of the selected node, the number of outgoing links $N_o$ representing the number of links (14) for which the selected node is a source node,
wherein the temporary score of each of the destination node is increased by the received score divided by the number of outgoing links of the selected node.

11. A computer implemented method according to any one of claims 1 to 10, wherein the temporary score associated to each node (13), in the step of initially associating a temporary score to each node, is the same for each node of the collection of nodes.

12. A computer implemented method according to any one of claims 1 to 11, wherein the step of associating a temporary score to each node (13) includes defining the temporary score of the respective node as a function of additional information about the node.

13. A computer implemented method according to any one of claims 1 to 12, wherein the damping coefficient is equal to 0,85.

14. A computer implemented method according to any one of claims 1 to 13, wherein the nodes of the collection of nodes are web pages (13) and the links of the collection of links are hyperlinks (14).

15. A computer program comprising computer-executable instructions that cause a computer to execute the method according to any one of claims 1 to 14.

**FIG.1**

**FIG.2**

| Select a Web Page | 15 |
| Distribution | 16 |
| Accumulation | 17 |
| Subtraction | 18 |

19

FIG.3

FIG.4

FIG.5

FIG.6

Europäisches
Patentamt

European
Patent Office

Office européen
des brevets

# EUROPEAN SEARCH REPORT

Application Number

EP 12 15 3223

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/050909 A1 (PREDA MIHAI [FR] ET AL) 13 March 2003 (2003-03-13) * paragraphs [0037] - [0052], [0069] - [0081], [0089] - [0097], [0115] - [0118], [0125] - [0127]; claims 5,9-12,17-20; figures 1-4 * | 1-15 | INV. G06F17/30 |
| X | JUNGHOO C ET AL: "Efficient crawling through URL ordering", COMPUTER NETWORKS AND ISDN SYSTEMS, NORTH HOLLAND PUBLISHING. AMSTERDAM, NL, vol. 30, no. 1-7, 1 April 1998 (1998-04-01), pages 161-172, XP004121430, ISSN: 0169-7552, DOI: 10.1016/S0169-7552(98)00108-1 * sections 2 to 4 * | 1-5, 11-15 | |
| X | HAVELIWALA T H: "Efficient Computation of PageRank", INTERNET CITATION, October 1999 (1999-10), XP002294816, Retrieved from the Internet: URL:http://citeseer.ist.psu.edu/haveliwala 99efficient.html [retrieved on 2004-09-03] * sections 2, 3.1 and 3.2 * | 1,15 | TECHNICAL FIELDS SEARCHED (IPC) G06F |
| X | "PAGERANK EXPLAINED OR EVERYTHING YOU'VE ALWAYS WANTED TO KNOW ABOUT PAGERANK", INTERNET CITATION, 27 January 2002 (2002-01-27), XP009056139, Retrieved from the Internet: URL:http://www.rankwrite.com [retrieved on 2002-01-27] * section: "The calsulation of PageRank" * | 1,15 | |

The present search report has been drawn up for all claims

| Place of search | Date of completion of the search | Examiner |
|---|---|---|
| Munich | 9 May 2012 | Herry, Tzvetanka |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**ANNEX TO THE EUROPEAN SEARCH REPORT
ON EUROPEAN PATENT APPLICATION NO.**

EP 12 15 3223

This annex lists the patent family members relating to the patent documents cited in the above-mentioned European search report.
The members are as contained in the European Patent Office EDP file on
The European Patent Office is in no way liable for these particulars which are merely given for the purpose of information.

09-05-2012

| Patent document cited in search report | Publication date | Patent family member(s) | Publication date |
|---|---|---|---|
| US 2003050909 A1 | 13-03-2003 | NONE | |

EPO FORM P0459

For more details about this annex : see Official Journal of the European Patent Office, No. 12/82

**EP 2 624 145 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030050909 A